Europäisches Patentamt

European Patent Office

Office européen des brevets

(19)

(11) Veröffentlichungsnummer: **0 094 110**
**B1**

(12)
# EUROPÄISCHE PATENTSCHRIFT

(45) Veröffentlichungstag der Patentschrift:
**11.06.86**

(21) Anmeldenummer: **83200485.7**

(22) Anmeldetag: **06.04.83**

(51) Int. Cl.⁴: **B 65 G 45/02**, F 16 H 57/05,
B 66 B 23/02

(54) Transportkette, insbesondere für Fahrtreppen oder Personenförderbänder.

(30) Priorität: **06.05.82 CH 2791/82**

(43) Veröffentlichungstag der Anmeldung:
**16.11.83 Patentblatt 83/46**

(45) Bekanntmachung des Hinweises auf die Patenterteilung:
**11.06.86 Patentblatt 86/24**

(84) Benannte Vertragsstaaten:
**AT DE FR GB IT SE**

(56) Entgegenhaltungen:
CH - A - 224 098
DE - C - 634 803
DE - C - 862 877
FR - A - 989 188
FR - A - 1 485 808
GB - A - 459 104
US - A - 1 385 968
US - A - 3 490 773

(73) Patentinhaber: **INVENTIO AG, Seestrasse 55,
CH-6052 Hergiswil NW (CH)**

(72) Erfinder: **Stuerchler, Werner, Neuhofweg 1,
CH-6045 Meggen (CH)**

## Beschreibung

Die Erfindung betrifft eine Transportkette, insbesondere für Fahrtreppen oder Personenförderbänder, mit mindestens eine Schmierfläche aufweisenden Kettenbolzen, welche zwei Aussenlaschen und eine zwischen diesen angeordnete Büchse tragen, wobei auf der Büchse ein Laufrad und beidseits des Laufrades je eine Innenlasche angeordnet sind. Eine derartige Transportkette ist der in der FR-A-1485 808 dargestellten Transportkette gattungsgemäß.

Mit der DE-AS Nr. 1 009 777 ist unter anderem mit den Figuren 5, 6 und 7 eine Transportkette für Fahrtreppen bekanntgeworden, die beidseits der Stufen angeordnet ist und auf den Kettenbolzen und den als Mitnehmerzapfen ausgebildeten Kettenbolzen mittig zwischen den Kettenlaschen gummibandagierte, auf Kugellagern laufende Räder aufweist. Im allgemeinen werden für solche Förderbänder Buchsenketten eingesetzt, wie sie aus dem Fachbuch "Stahlgelenkketten und Kettengetriebe" von Dr. Ing. Hans-Günther Rachner, Springer-Verlag, 1962, Seite 6, Abb. 7, hervorgehen; wobei die Kettenteilung an die Stufen- oder Plattenteilung und an die Durchmesser der Laufräder angepasst wird. Förderketten dieser Art haben den Nachteil, dass sie ungeeignet sind für Anlagen, die im Freien, ohne Überdachung, oder in Unterführungen oder in U-Bahnstationen aufgestellt sind, da sie laufend zu Störungen Anlass geben. Einerseits können Feuchtigkeit und Nässe, eventuell in Verbindung mit von Passanten auf die Transportketten getragenen Salzrückständen, die Rostbildung fördern, anderseits kann der der Kette anhaftende Schmutz in die Gelenkflächen gelangen und dort wie eine Schleifpaste wirken. Angefressene Gelenke, ungleiche und abnormal grosse Abnutzung, und dadurch Schräglauf des Transportbandes, verbunden mit Streifgeräuschen etc. sind die Resultate.

Gemäss dem Kettenfachbuch von Dr. Ing. Hans-Günther Rachner "Stahlgelenkketten und Kettengetriebe", Springer-Verlag, werden mit Abb. 60, Seite 51, konstruktive Massnahmen zur sicheren Schmierung der Gelenkflächen vorgeschlagen, indem jedem Kettenbolzen eine zentrale Schmierstelle mit Schmiernippel zugeordnet wird, um verbrauchtes Fett und eventuell von aussen her in die Gelenke eingedrungenen Schmutz oder eingedrungene Feuchtigkeit von innen her periodisch durch neues Fett aus den Gelenken herauszupressen. Der Nachteil dieser Kettenausführung liegt darin, dass die Herstellung der Kettenbolzen sehr aufwendig und teuer ist und die periodische Nachschmierung jedes einzelnen Kettengelenkes viel Zeit, gute Zugänglichkeit und gewissenhafte Arbeit erfordert.

Der Erfindung liegt die Aufgabe zugrunde, eine Transportkette vorzuschlagen, die sich für den Einsatz in feuchter Atmosphäre und bei Schmutzanfall eignet, billig in der Herstellung ist und keine Nachschmierung für die Gelenke erfordert.

Diese Aufgabe wird durch die in den Ansprüchen gekennzeichnete Erfindung gelöst.

Die durch die Erfindung erreichten Vorteile sind im wesentlichen darin zu sehen, dass durch die Gummi-O-Ring-Dichtungen der Kettenbolzen und Mitnehmerzapfen und den zwischen den Büchsen und den Aussenlaschen angeordneten Dichtungsscheiben das Eindringen von Feuchtigkeit und Schmutzpartikeln in die Gelenke der Kette verhindert wird und der für die Lebensdauer der Kette ausgelegte Schmiervorrat in den Schmierkammern im Innern der Gelenke erhalten bleibt. Dadurch werden die Abnutzung der Ketten reduziert, unliebsame Geräusche verhindert und die Nachschmierung der Gelenke unnötig. Vor allem aber können Fahrtreppen, die mit der erfindungsgemässen Kette ausgerüstet sind, bedenkenlos im Freien, ohne Überdachung, aufgestellt und die Nachschmierintervalle allein für die Laschen der Ketten wesentlich vergrössert werden.

Auf beiliegender Zeichnung ist ein Ausführungsbeispiel der Erfindung dargestellt, das im folgenden näher erläutert wird. Es zeigt:

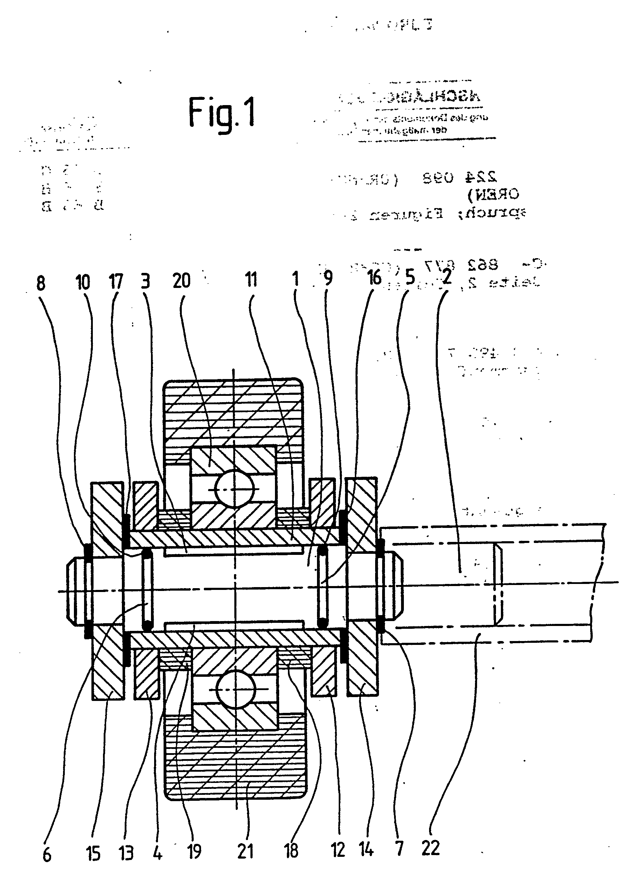

Fig. 1 einen Schnitt durch ein Kettengelenk, quer zur Bewegungsrichtung.

Im Kettenbolzen 1 und im Mitnehmerzapfen 2 sind zwei parallel zur Bewegungsrichtung der Kette verlaufende Abflachungen angeordnet, die als Schmierflächen 3, 4 dienen. In zwei Umfangsrillen 5, 6, die zwischen den Enden der Schmierflächen und den Anfräsungen für die Aufnahme der Aussenlaschen 14, 15 in die Kettenbolzen 1 und Mitnehmerzapfen 2 eingedreht sind, ruhen zwei Gummi-O-Ringe 9, 10, die zusammen mit der von den Kettenbolzen 1 und den Mitnehmerzapfen 2 getragenen Büchse 11 einerseits gegen Feuchtigkeit und Schmutz von aussen und anderseits gegen den Verlust des Schmiervorrates von innen dichten. Auf der Büchse 11 sind die Innenlaschen 12, 13 aufgepresst, die ihrerseits über die Distanzringe 18, 19 den Innenring des Kugellagers 20 fixieren. Auf den Aussenring des Kugellagers 20 ist eine geräuschdämpfende, elastische Bandage 21 aufgebracht. Zwischen den Aussenlaschen 14, 15 und der Büchse 11 sind Dichtungsscheiben 16, 17 eingelegt. Mit zwei Seegerringen 7, 8 wird die Transportkette in jedem Gelenk zusammengehalten. Eine Verbindungsachse 22 verbindet eine linke und eine rechte Transportkette zu einer Stufen- oder Plattenkette.

Die erfindungsgemässe Transportkette weist pro Längeneinheit je nach Kettenteilung eine Anzahl Kettenbolzen 1 und je nach Platten- oder Stufenteilung eine Anzahl Mitnehmerzapfen 2 auf. die Platten- oder Stufenteilung beträgt ein ganzes Vielfaches der Kettenteilung, so dass beispielsweise jeweils nach zwei oder drei Kettenbolzen ein verlängerter Mitnehmerzapfen 2 folgt. Zwei Transportketten, eine linke Kette mit nach rechts vorstehenden Mitnehmerzapfen 2 und eine rechte Kette mit nach links vorstehenden Mitnehmerzapfen 2 werden mit rohrförmigen Verbindungsachsen 22 miteinander verbunden, wobei je zwei gegenüberliegende Mitnehmerzapfen in die beiden stirnseitigen Bohrungen der Verbindungsachse 22 eingreifen. An den Verbindungsachsen 22 werden nicht dargestellte Platten oder Stufen lösbar befestigt. Die beiden Enden jeder Kette werden zu einem endlosen Transportband zusammengefügt. Ein ebenfalls nicht dargestelltes Schienensystem trägt einerseits die beiden Ketten im Vorlauf und im Rücklauf und anderseits die mit zusätzlichen Tragrollen versehenen Stufen oder Platten. An den Umkehrstellen werden die Ketten auf paarweise angeordnete Kettenräder aufgelegt, welche auf einer Seite das Transportband antreiben und auf der anderen Seite spannen. Transportbänder in der beschriebenen Art ermöglichen den Transport von Passagieren und/oder Materialien.

Anstelle der im Beispiel vorgeschlagenen Ausführung können beispielsweise in der Bohrung der Büchse jeweils im Bereich der Büchsenenden Innen-Umfangsrillen vorgesehen sein, in die O-Ringe eingelegt werden, welche die Kettengelenke gegen Schmutz und Feuchtigkeit von aussen und gegen Schmiermittelverlust schützen.

Anstelle der im Beispiel vorgeschlagenen Buchsenkette mit einem auf jeder Büchse angeordneten Kugellager-Laufrad könnte auch eine Einfachrollenkette mit Stahlrollen und pro Stufe oder Platte je seitlich neben den Ketten vorgesehenen Laufrollen verwendet werden.

Zur Vergrösserung des Schmiermittelvorrates innerhalb der Kettengelenke können in den Schmierflächen ein oder mehrere, in Fig. 1 nicht dargestellte Löcher, vorzugsweise Durchgangslöcher, vorgesehen werden, welche beim Zusammenbau der Ketten mit einem alterungsbeständigen Schmiermittel teilweise gefüllt werden.

## Patentansprüche

1. Transportkette, insbesondere für Fahrtreppen oder Personenförderbänder, mit mindestens eine Schmierfläche (3, 4) aufweisenden Kettenbolzen (1), welche zwei Aussenlaschen (14, 15) und eine zwischen diesen angeordnete Büchse (11) tragen, wobei auf der Büchse (11) ein Laufrad und beidseits des Laufrades je eine Innenlasche (12, 13) angeordnet sind, dadurch gekennzeichnet, dass am Kettenbolzen (1) beidseits der Schmierfläche (3, 4) und innerhalb der Büchse (11) je eine mit einem Dichtungsring (9, 10) versehene Umfangsrille (5, 6) und zwischen den Büchsenenden und der gegenüberliegenden Aussenlasche (14, 15) je eine Dichtungsscheibe (16, 17) angeordnet sind.

2. Transportkette nach Anspruch 1, dadurch gekennzeichnet, dass der Dichtungsring (9, 10) ein Gummi-O-Ring ist.

3. Transportkette nach Anspruch 1, dadurch gekennzeichnet, dass die Dichtungsscheibe (16, 17) eine Scheibe aus verschleissfreiem Werkstoff ist.

4. Transportkette nach Anspruch 1, dadurch gekennzeichnet, dass die Schmierfläche (3, 4) der Kettenbolzen (1) mindestens ein senkrecht zur Schmierfläche und in der Achse des Kettenbolzens angeordnetes Loch aufweist.

## Claims

7. Transport chain, in particular for escalators or moving walk-ways, with chain pins (1), which display at least one lubricating surface (3, 4) and carry two outer straps (14, 15) and a bushing (11) arranged between these, wherein a runner is arranged on the bushing on the bushing (11) and a respective inner strap (12, 13) is arranged to both sides of the runner, characterised thereby, that a respective groove (5, 6) provided with a sealing ring (9, 10) is arranged at the chain pin (1) to both sides of the lubricating surface (3, 4) and within the bushing (11) and a respective sealing washer (16, 17) is arranged between the bushing ends and the outer strap (14, 15) lying opposite thereto.

2. Transport chain according to claim 1, characterised thereby, that the sealing ring (9, 10) is a rubber O-ring.

Transport chain according to claim 1, characterised thereby, that the sealing washer (16, 17) is a washer of wear-resistant material.

4. Transport chain according to claim 1, characterised thereby, that the lubricating surface (3, 4) of the chain pins (1) displays at least one hole arranged perpendicularly to the lubricating surface and in the axis of the chain pin.

## Revendications

1. Chaîne transporteuse, en particulier pour escaliers roulants ou tapis roulants pour personnes, avec des tourillons de chaîne (1) qui présentent au moins une surface de graissage (3, 4) et qui portent deux parois de maillon externes (14, 15) et un manchon (11) disposé entres celles-ci, un galet de roulement et deux parois de maillon internes (12, 13) respectivement disposées de part et d'autre du galet de roulement étant montés sur le manchon (11), caractérisée en ce que sur le tourillon de chaîne (1), de chaque côté de la surface de graissage (3, 4) et à l'intérieur du manchon (11), est prévue une gorge périphérique (5, 6) pourvue d'un anneau d'étanchéité (9, 10), et en ce qu'entre chaque extrémité du manchon et la paroi de maillon externe (14, 15) qui lui est opposée est disposée une rondelle d'étanchéité (16, 17).

2. Chaîne transporteuse selon la revendication 1, caractérisée en ce que l'anneau d'étanchéité (9, 10) est un anneau de caoutchouc circulaire.

3. Chaîne transporteuse selon la revendication 1, caractérisée en ce que la rondelle d'étanchéité (16, 17) est une rondelle constituée d'une matière résistant à l'usure.

4. Chaîne transporteuse selon la revendication 1, caractérisée en ce que la surface de graissage (3, 4) des tourillons de chaîne (1) comporte au moins un perçage disposé perpendiculairement à la surface de graissage et dans l'axe du tourillon de chaîne.

1/1

## Fig.1